# DEMANDE DE BREVET EUROPEEN

(11) **EP 3 290 268 A1**
(43) Date de publication de la demande: **07.03.2018**
(21) Numéro de dépôt: 17184265.1
(22) Date de dépôt: 01.08.2017
(51) Int. Cl.: B60Q 1/00, B60Q 1/26, F21S 41/19, F21V 19/00, F21K 9/20, F21Y 115/10, F21S 41/39, F21S 41/147

(54) **MODULE LUMINEUX COMPORTANT AU MOINS UNE SOURCE LUMINEUSE**

(30) Priorité: 30.08.2016 FR 1658032
(71) Demandeur: Valeo Vision, 93012 Bobigny Cedex (FR)
(72) Inventeur: BLUSSEAU, Eric, 93012 Bobigny Cedex (FR)

(57) **Abrégé**

Module lumineux (10) pour véhicule automobile, ledit module lumineux (10) comprenant :
- un moyen optique (3) monté fixe dans le module lumineux (10), ledit moyen optique (3) comprenant une base (30) avec un premier logement (12A) ;
- un support (5) du moyen optique (3) mobile en translation par rapport au moyen optique (3), ledit support (5) du moyen optique (3) comprenant une base (50) avec un deuxième logement (12B), ledit support (5) du moyen optique (3) étant adapté pour prendre :
- une position de verrouillage pour maintenir au moins une source lumineuse (7) en partie dans ledit premier logement (12A) et en partie dans ledit deuxième logement (12B) ; et
- une position déverrouillage pour retirer ladite au moins une source lumineuse (7) du module lumineux (10) ;

- ladite au moins une source lumineuse (7) étant amovible et comprenant :
- des moyens d'émission de lumière (11) ;
- un support mécanique (13) des moyens d'émission de lumière (11).

## Description

### DOMAINE TECHNIQUE DE L'INVENTION

La présente invention concerne un module lumineux pour véhicule automobile.
Elle trouve une application particulière mais non limitative dans les dispositifs d'éclairage, tels que des projecteurs de véhicule automobile.

### ARRIÈRE-PLAN TECHNOLOGIQUE DE L'INVENTION

Un module lumineux pour véhicule automobile comprend de manière connue de l'homme du métier :
- un moyen optique;
- un support du moyen optique;
- au moins une source lumineuse logée dans le module lumineux.
La source lumineuse comprend :
- des moyens d'émission de lumière;
- un support mécanique des moyens d'émission de lumière.
La durée de vie d'une source lumineuse, telle qu'une puce émettrice semi-conductrice est globalement supérieure à 3 000 heures de fonctionnement. En cas de panne, la question du remplacement de cette source lumineuse se pose. Afin de remplacer une source lumineuse défectueuse, il est connu de retirer l'ensemble du module lumineux, c'est-à-dire le moyen optique et la source lumineuse défectueuse.
Un inconvénient de cet état de la technique, est que le remplacement de l'ensemble du module lumineux entraîne la mise au rebut d'éléments, tel que le moyen optique, éléments qui ne sont pas nécessairement défectueux. Il est ainsi nécessaire pour l'opérateur d'acheter un nouveau module lumineux complet à chaque fois qu'une source lumineuse est défectueuse, ce qui rend plus coûteuse l'opération de remplacement du module lumineux.

Dans ce contexte, la présente invention vise à résoudre l'inconvénient précédemment mentionné.

### DESCRIPTION GENERALE DE L'INVENTION

A cette fin l'invention propose un module lumineux pour véhicule automobile, ledit module lumineux comprenant :
- un moyen optique monté fixe dans le module lumineux, ledit moyen optique comprenant une base avec un premier logement ;
- un support du moyen optique mobile en translation par rapport au moyen optique, ledit support du moyen optique comprenant une base avec un deuxième logement, ledit support du moyen optique étant adapté pour prendre :
   - une position de verrouillage pour maintenir au moins une source lumineuse en partie dans ledit premier logement et en partie dans ledit deuxième logement ; et
   - une position de déverrouillage pour retirer ladite au moins une source lumineuse du module lumineux ;
- ladite au moins une source lumineuse étant amovible et comprenant :
   - des moyens d'émission de lumière ;
   - un support mécanique des moyens d'émission de lumière.

Ainsi, comme on va le voir en détail ci-après, la source lumineuse amovible est placée dans un logement formé en partie d'un premier logement appartenant au moyen optique et en partie d'un deuxième logement appartenant au support du moyen optique. Le support du moyen optique est mobile en translation par rapport au moyen optique entre une position de verrouillage et une position de déverrouillage. En position de déverrouillage, la source lumineuse est accessible par un opérateur et il est alors possible de retirer la source lumineuse défectueuse hors du module lumineux. Seule la source lumineuse est alors remplacée, ce qui diminue le coût global de cette opération de maintenance.

Selon des modes de réalisation non limitatifs, le module lumineux peut comporter en outre une ou plusieurs caractéristiques supplémentaires parmi les suivantes :
Selon un mode de réalisation non limitatif, le support du moyen optique est mobile en translation selon :
   - une direction longitudinale ; ou
   - une direction transversale perpendiculaire à la direction longitudinale ; ou
   - une direction en biais ayant une composante selon la direction longitudinale et une composante selon la direction transversale.

Selon un mode de réalisation non limitatif, ledit module lumineux comprend des moyens de verrouillage.

Selon un mode de réalisation non limitatif, les moyens de verrouillage comprennent deux paires de glissières disposées de part et d'autre de la source lumineuse.

Selon un mode de réalisation non limitatif, chaque glissière comprend :
- une contrepartie appartenant au moyen optique ;
- un ergot appartenant au support du moyen optique adapté pour coopérer avec ladite contrepartie ;
- au moins une lame ressort appartenant au moyen optique adaptée pour maintenir l'ergot dans la contrepartie.

Selon un mode de réalisation non limitatif, la source lumineuse est bloquée dans le premier logement et le deuxième logement lorsque le support du moyen optique est en position de verrouillage :
- selon la direction longitudinale en au moins un point de référence primaire au moyen d'au moins un moyen de blocage primaire ;
- selon la direction transversale en au moins un point de référence secondaire au moyen d'au moins un moyen de blocage secondaire.

Selon un mode de réalisation non limitatif, le moyen de blocage primaire est une lame ressort ou un chanfrein.

Selon un mode de réalisation non limitatif, le moyen de blocage secondaire est un chanfrein ou une lame ressort.

Selon un mode de réalisation non limitatif, la source lumineuse est bloquée dans le premier logement et le deuxième logement lorsque le support du moyen optique est en position de verrouillage suite à une translation selon la direction longitudinale:
- selon la direction longitudinale en deux points de référence primaires au moyen de deux moyens de blocage primaires de la base du support du moyen optique ;
- selon la direction transversale en un point de référence secondaire au moyen d'un moyen de blocage secondaire.

Selon un mode de réalisation non limitatif, les deux moyens de blocage primaire et le moyen de blocage secondaire sont des lames ressorts.

Selon un mode de réalisation non limitatif, la source lumineuse est bloquée dans le premier logement et le deuxième logement lorsque le support du moyen optique est en position de verrouillage suite à une translation selon la direction transversale :
- selon la direction longitudinale en un point de référence primaire au moyen d'un moyen de blocage primaire de la base du moyen optique ;
- selon la direction transversale en deux points de référence secondaires au moyen de deux moyens de blocage secondaires de la base du support du moyen optique.

Selon un mode de réalisation non limitatif, le moyen de blocage primaire et les deux moyens de blocage secondaires sont des chanfreins.

Selon un mode de réalisation non limitatif, la source lumineuse est bloquée dans le deuxième logement selon une direction normale en trois points de référence tertiaires au moyen de trois moyens de blocage tertiaires.

Selon un mode de réalisation non limitatif, les trois moyens de blocage tertiaires sont trois lames ressorts appartenant à la base du support du module optique.

Selon un mode de réalisation non limitatif, ledit module lumineux comprend en outre des moyens de calage pour le maintien d'un connecteur d'alimentation de la source lumineuse sur ledit module lumineux.

Selon un mode de réalisation non limitatif, le support du moyen optique est un radiateur.

Selon un mode de réalisation non limitatif, les moyens d'émission de lumière comportent une puce émettrice semi-conductrice.

### BREVE DESCRIPTION DES FIGURES

L'invention et ses différentes applications seront mieux comprises à la lecture de la description qui suit et à l'examen des figures qui l'accompagnent.

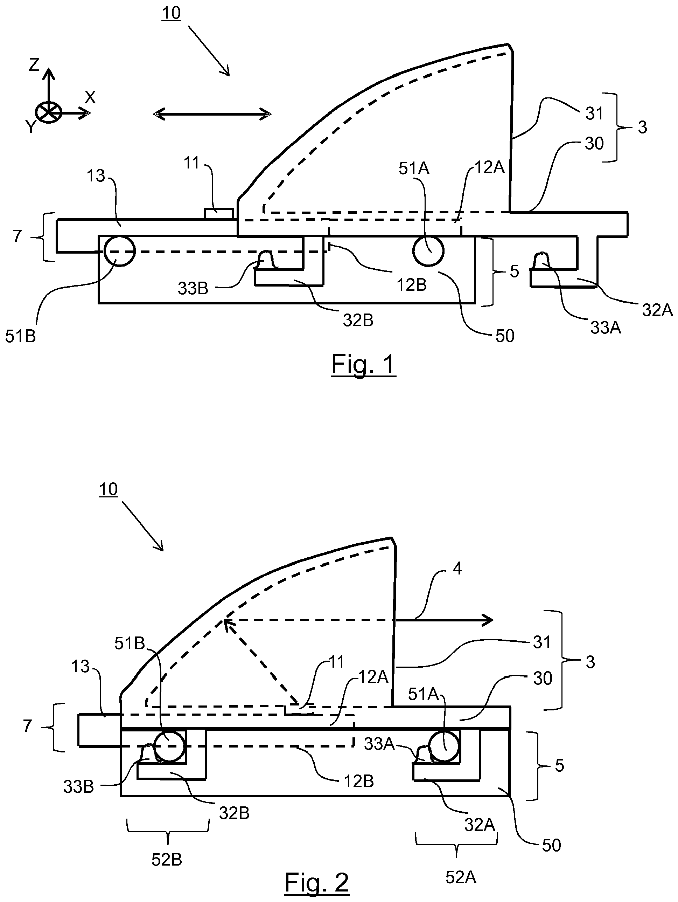

- la figure 1 représente schématiquement une vue de côté d'un module lumineux pour véhicule automobile selon un mode de réalisation non limitatif de l'invention, ledit module lumineux comprenant un moyen optique et un support du moyen optique dans une position de déverrouillage dans laquelle une source lumineuse est accessible ;
- la figure 2 représente schématiquement une vue de côté du module lumineux de la figure 1 selon un mode de réalisation non limitatif, ledit support du moyen optique étant dans une position de verrouillage dans laquelle la source lumineuse est maintenue dans ledit module lumineux ;

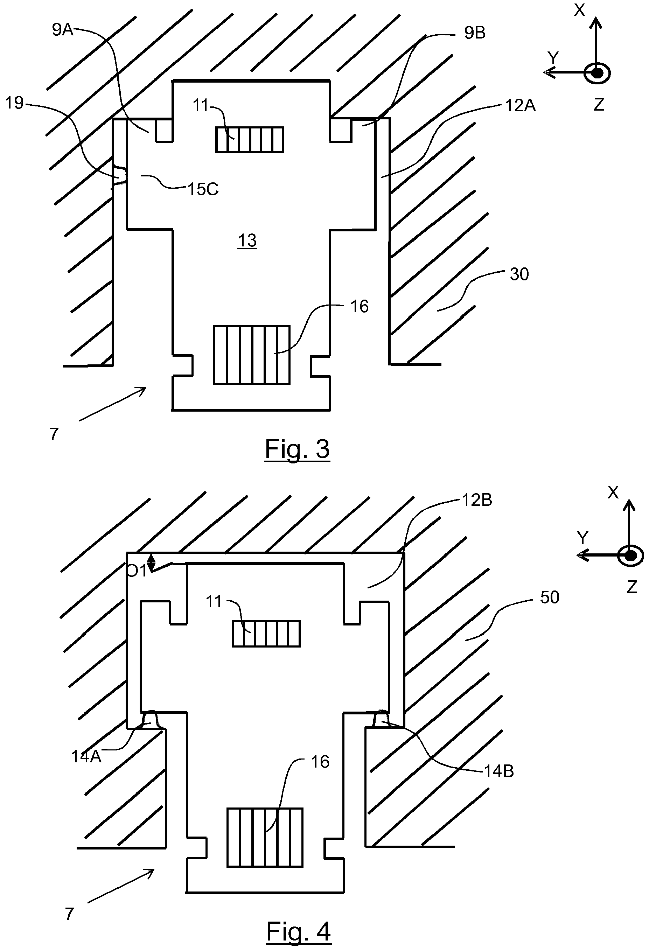

- les figures 3 et 4 représentent une vue de dessus de la source lumineuse lorsqu'elle est maintenue en partie dans un premier logement du moyen optique et lorsqu'elle est maintenue en partie dans un deuxième logement du support du moyen optique du module lumineux de la figure 2, selon une direction longitudinale X et selon une direction transversale Y, suite à une translation du support du moyen optique selon cette direction longitudinale X, selon un premier mode de réalisation non limitatif ;

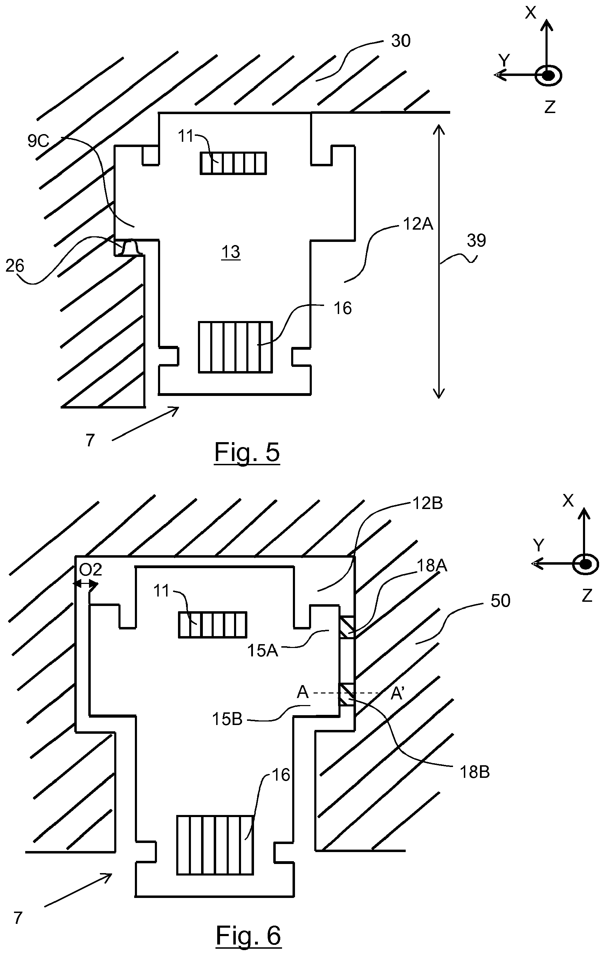

- la figure 5 représente une vue de dessus de la source lumineuse lorsqu'elle est maintenue en partie dans le premier logement du moyen optique du module lumineux de la figure 2, selon la direction longitudinale X, suite à une translation du support du moyen optique selon la direction transversale Y, selon un second mode de réalisation non limitatif ;
- la figure 6 représente une vue de dessus de la source lumineuse lorsqu'elle est maintenue en partie dans le deuxième logement du support du moyen optique du module lumineux de la figure 2, selon la direction transversale Y, suite à une translation du support du moyen optique selon cette direction transversale Y, selon une première variante de réalisation d'un second mode de réalisation non limitatif ;

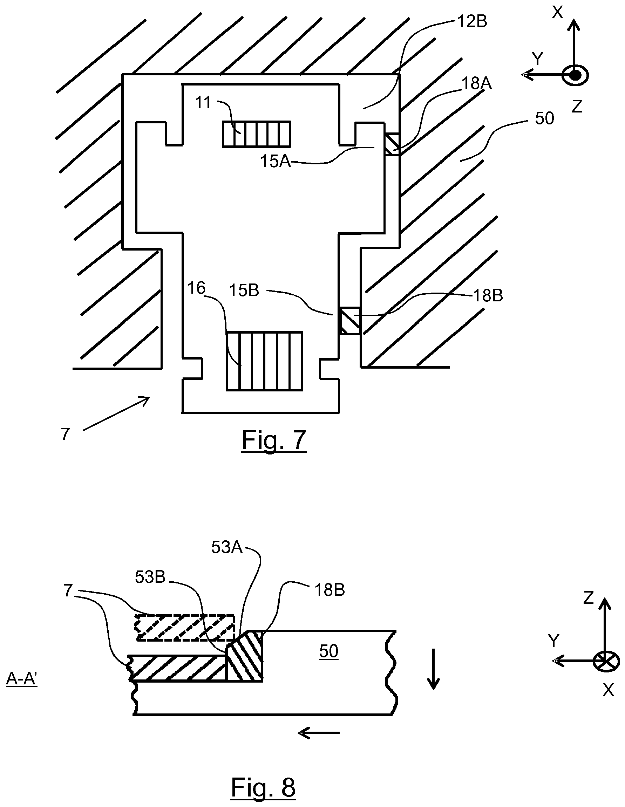

- la figure 7 représente une vue de dessus de la source lumineuse lorsqu'elle est maintenue en partie dans le deuxième logement du support du moyen optique du module lumineux de la figure 2, selon la direction transversale Y, suite à une translation du support du moyen optique selon cette direction transversale Y, selon une deuxième variante non limitative du second mode de réalisation ;
- La figure 8 est une vue en coupe selon un axe A-A' de la figure 6 au niveau d'un moyen de blocage de la source lumineuse dans le deuxième logement du support du moyen optique ;

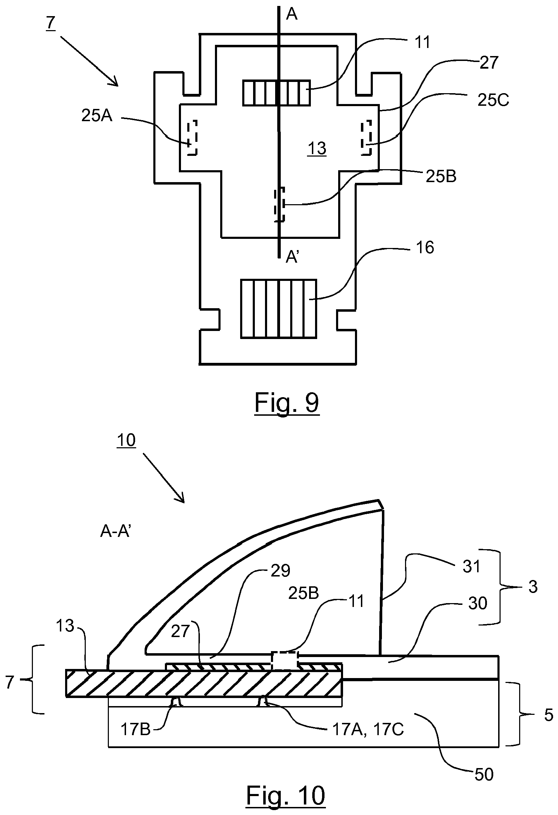

- Les figures 9 et 10 représentent selon un mode de réalisation non limitatif la source lumineuse lorsqu'elle est maintenue dans le module lumineux de la figure 2 selon une direction normale Z ;

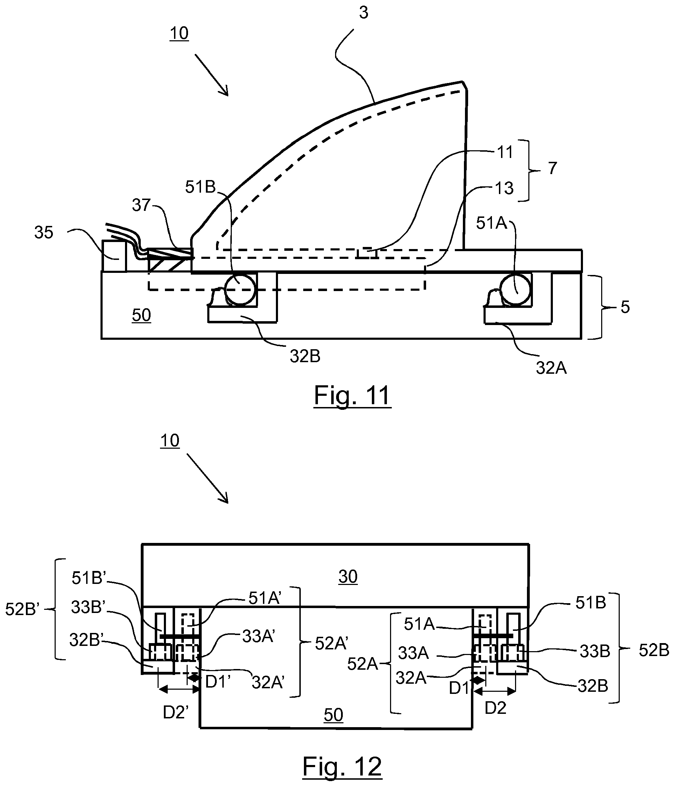

- La figure 11 représente selon un mode de réalisation non limitatif une vue en coupe du module lumineux de la figure 2, ledit module lumineux comprenant des moyens de calage pour le maintien d'un connecteur d'alimentation de la source lumineuse sur ce module lumineux ;
- La figure 12 représente selon un mode de réalisation non limitatif une vue de derrière du module lumineux de la figure 2, ledit module lumineux comprenant deux paires de glissières disposées de part et d'autre de la source lumineuse.

### DESCRIPTION DE MODES DE REALISATION DE L'INVENTION

Les éléments identiques, par structure ou par fonction, apparaissant sur différentes figures conservent, sauf précision contraire, les mêmes références.
Le module lumineux 10 pour véhicule automobile selon l'invention est décrit en référence aux figures 1 à 12.
Par véhicule automobile, on entend tout type de véhicule motorisé.

Dans un mode de réalisation non limitatif pris dans la suite de la description, le module lumineux 10 appartient à un dispositif d'éclairage et/ou de signalisation. Dans une variante de réalisation non limitative, le dispositif d'éclairage et/ou de signalisation est un projecteur de véhicule automobile.

Comme illustré sur les figures 1 à 2, le module lumineux 10 comprend :
- un moyen optique 3 monté fixe dans le module lumineux 10. Ce moyen optique comprend une base 30 comprenant un premier logement 12A ;
- un support 5 du moyen optique 3 mobile en translation par rapport au moyen optique 3 selon :
   - une direction longitudinale X ou ;
   - une direction transversale Y perpendiculaire à la direction longitudinale X, ou ;
   - une direction en biais ayant une composante selon la direction longitudinale X et une composante selon la direction transversale Y. Ce support 5 du moyen optique 3 comprend une base 50 comprenant un deuxième logement 12B. Le support 5 du moyen optique 3 est adapté pour prendre :
      - une position de verrouillage pour maintenir au moins une source lumineuse 7 en partie dans le premier logement 12A et en partie dans le deuxième logement 12B ; et
      - une position de déverrouillage pour retirer la source lumineuse 7 du module lumineux 10.
- la source lumineuse 7 est amovible et comprend :
   - des moyens d'émission de lumière 11 ;
   - un support mécanique 13 des moyens d'émission de lumière 11.

Le module lumineux 10 est adapté pour émettre des rayons lumineux 4 formant un faisceau lumineux. Dans un exemple non limitatif, le module lumineux 10 est adapté pour assurer une fonction photométrique dite « high beam » pour réaliser un feu de route. Dans un autre exemple non limitatif, le module lumineux 10 est adapté pour assurer une fonction photométrique dite « low beam » pour réaliser, par exemple, un feu de croisement.

Les différents éléments du module lumineux 10 sont décrits en détail ci-après.

### • Moyen optique

Dans un mode de réalisation non limitatif, le moyen optique 3 est :
- un réflecteur ;
- une lentille ; ou
- un guide de lumière ; ou
- un collimateur.

Le moyen optique 3 coopère avec la source lumineuse 7 décrite ci-après pour former les rayons lumineux 4.
Dans l'exemple non limitatif illustré sur les figures 1, 2, 10 et 11, le moyen optique 3 est un réflecteur qui comprend un miroir 31 et une base 30.

### • Source lumineuse

Outre les moyens d'émission de lumière 11 et le support mécanique 13, la source lumineuse 7 comprend une interface de connexion électrique 16. L'interface de connexion électrique 16 est adaptée pour l'alimentation électrique et le pilotage des moyens d'émission de lumière 11.
L'interface de connexion électrique 16 est adaptée pour coopérer avec un connecteur électrique externe qui permet d'envoyer des commandes de pilotage à la source lumineuse 7 et de l'alimenter.

La source lumineuse 7 est adaptée pour coopérer avec le module optique 3. Dans un mode de réalisation non limitatif, la source lumineuse 7 comprend une pluralité de moyens d'émission de lumière 11. Dans l'exemple non limitatif illustré sur les figures 3, 4, 5, 6, 7 et 9, il y a six moyens d'émission de lumière.
Dans un mode de réalisation non limitatif, les moyens d'émission de lumière 11 comportent au moins une puce émettrice semi-conductrice.
Dans une variante de réalisation non limitative, une puce émettrice semi-conductrice fait partie d'une diode électroluminescente. Par diode électroluminescente, on entend tout type de diodes électroluminescentes, que ce soit dans des exemples non limitatifs des LED (« Light Emitting Diode »), une OLED (« Organic LED ») ou une AMOLED (« Active-Matrix-Organic LED »), ou encore une FOLED (« Flexible OLED »).
La source lumineuse 7 est amovible, à savoir elle peut être retirée du module lumineux 10 sans retirer le module optique 3 dudit module lumineux 10. La source lumineuse 7 est ainsi interchangeable.

### • Support du moyen optique

Dans un mode de réalisation non limitatif, le support 5 du moyen optique 3 est un radiateur qui permet d'évacuer la chaleur provenant de la source lumineuse 7 hors du module lumineux 10.
Le support 5 du moyen optique 3 est mobile en translation par rapport au moyen optique 3 et c'est son déplacement entre la position de verrouillage et la position de déverrouillage qui va permettre le retrait de la source lumineuse 7 hors du module lumineux 10.

Dans un mode de réalisation non limitatif, c'est l'utilisateur qui assure le déplacement en translation du support 5 du moyen optique 3 entre la position de déverrouillage et la position de verrouillage. Dans la position de déverrouillage, la source lumineuse 7 peut être retirée du module lumineux 10. Dans la position de verrouillage, le moyen optique 3 et le support 5 du moyen optique 3 sont reliés mécaniquement par des moyens de verrouillage 52A, 52B, 52A', 52B' de sorte à assurer un verrouillage du support du moyen optique 3 par rapport audit moyen optique 3 et un blocage de la source lumineuse 7 dans le module lumineux 10.

Dans un mode de réalisation non limitatif tel qu'illustré à la figure 12, les moyens de verrouillage comprennent deux paires de glissières 52A, 52B, 52A', 52B' disposées de part et d'autre de la source lumineuse 7. Ces paires de glissières sont adaptées pour verrouiller de manière stable de chaque côté de la source lumineuse 7, le support 5 du moyen optique 3 par rapport audit moyen optique 3. Les glissières sont plus ou moins espacées par rapport à la base 50 du support 5 du moyen optique 3.

Dans un mode de réalisation non limitatif, chaque glissière 52A, 52B, 52A', 52B' comprend respectivement :
- une contrepartie 32A, 32B, 32A', 32B' appartenant au moyen optique 3 ;
- un ergot 51A, 51 B, 51A', 51 B' appartenant au support 5 du moyen optique 3 adapté pour coopérer respectivement avec ladite contrepartie 32A, 32B, 32A', 32B' ;
- au moins une lame ressort 33A, 33B, 33A', 33B' appartenant au moyen optique 3 adaptée pour maintenir respectivement l'ergot 51A, 51 B, 51A', 51 B' dans la contrepartie 32A, 32B, 32A', 32B'.
Sur la vue de côté du module lumineux 10 de la figure 1, sont représentées les contreparties 32A, 32B, l'ergot 51 B, les deux lames ressorts 33A, 33B.
Tel qu'illustré sur la figure 12, les contreparties 32A, 32A' situées à l'avant du module lumineux 10 ont une distance D1, D1' inférieure à la distance D2, D2' des contreparties 32B, 32B' situées à l'arrière du module lumineux. Lors de la translation du support 5 du moyen optique 3 par rapport au moyen optique 3, les ergots 51 A, 51 A' passent entre les contreparties 32B, 32B' avant d'être bloqués par les contreparties 32A, 32A'.
Ainsi, chaque contrepartie du moyen optique 3 est adaptée pour bloquer en translation l'ergot correspondant du support du moyen optique 3. Chaque lame ressort assure un maintien en blocage de l'ergot correspondant contre une contrepartie correspondante, dans la position de verrouillage du support du moyen optique 3.

Dans la position de verrouillage du support 5 du moyen optique 3, telle que représentée à la figure 2 :
- le moyen optique 3 et le support 5 du moyen optique 3 sont en contact. Plus particulièrement, la base 30 du moyen optique 3 et la base 50 du support 5 du moyen optique 3 sont en contact ;
- le premier logement 12A et le deuxième logement 12B sont en vis-à-vis l'un de l'autre ;
- la source lumineuse 7 est bloquée dans le module lumineux 10. Plus particulièrement, le support mécanique 13 des moyens d'émission de lumière 11 est :
   - bloqué horizontalement dans le premier logement 12A du moyen optique 3 et dans le deuxième logement 12B du support 5 du moyen optique 3 ;
   - bloqué verticalement par le moyen optique 3 contre le support 5 de ce moyen optique 3.
La source de lumière 7 est ainsi maintenue en position dans le module optique 3. De cette manière, les moyens d'émission de lumière 11 de la source lumineuse 7 sont positionnés et bloqués dans une zone focale F du moyen optique 3. Cela permet d'avoir une bonne focalisation sur le module optique 3 et ainsi d'optimiser le faisceau lumineux.
On notera qu'il existe une interface thermique (non illustrée) entre le support mécanique 13 et le support 5 du moyen optique 3. Cette interface thermique permet d'assurer une conductivité thermique entre le support mécanique 13 et la source lumineuse 7.

Dans un mode de réalisation non limitatif, la source lumineuse 7 est bloquée dans le deuxième logement 12B et le premier logement 12A lorsque le support 5 du moyen optique 3 est en position de verrouillage :
- selon une direction longitudinale X en au moins un point de référence primaires 9A, 9B, 9C (décrits plus loin) au moyen d'au moins un moyen de blocage primaire 14A, 14B, 26 (décrits plus loin) de la base 30 du moyen optique 3 ou de la base 50 du support du moyen optique 5 ;
- selon une direction transversale Y, perpendiculaire à la direction longitudinale X, en au moins un point de référence secondaire 15A, 15B, 15C (décrit plus loin) au moyen d'au moins un moyen de blocage secondaire 18A, 18B, 19 (décrit plus loin) de la base 30 du moyen optique 3 ou de la base 50 du support du moyen optique 5.

Dans un mode de réalisation non limitatif, le moyen de blocage primaire est une lame ressort 14A, 14B.
Dans un autre mode de réalisation non limitatif, le moyen de blocage primaire est un chanfrein 26.
Dans un mode de réalisation non limitatif, le moyen de blocage secondaire est un chanfrein 18A, 18B ou une lame ressort 19.

Dans un mode de réalisation non limitatif, la source lumineuse 7 est bloquée dans le premier logement 12A et le deuxième logement 12B lorsque le support 5 du moyen optique 3 est en position de verrouillage, selon une direction normale Z en des points de référence tertiaires 25A, 25B, 25C, sur lesquels le support 5 du module optique 3 (en particulier sa base 50) vient appuyer lorsque le support 5 du module optique 3 est en position de verrouillage.

Dans un mode de réalisation non limitatif illustré à la figure 9, la source lumineuse 7 comprend trois points de référence tertiaires 25A, 25B, 25C adaptés pour coopérer avec trois moyens de blocage tertiaires 17A, 17B et 17C pour bloquer le support mécanique 13 de la source lumineuse 7 contre le fond du premier logement 12A selon la direction normale Z.
On notera que sur la figure 9, les trois points de référence tertiaires 25A, 25B, 25C sont en pointillés car ils sont positionnés sur la face du support mécanique 3 qui est opposée à celle sur laquelle sont positionnés les moyens d'émission de lumière 11 et l'interface de connexion électrique 16.

Dans un mode de réalisation non limitatif illustré à la figure 10, les moyens de blocage tertiaires sont trois lames ressorts 17A, 17B, 17C disposées sur la base 50 du support 5 du moyen optique 3. Ces lames ressorts 17A, 17B, 17C sont mises progressivement en tension au fur et à mesure de la translation du support 5 du moyen optique 3 par rapport au moyen optique 3. Les lames ressorts 17A, 17B, 17C appuient sur le support mécanique 13 des moyens d'émission de lumière 11 sorte qu'en position de verrouillage le support 5 du moyen optique 3 maintient la source lumineuse 7 en position selon la direction normale Z. Ainsi, le support mécanique 13 appuie sur la base 30 du moyen optique 3 selon la direction normale Z.
La base 50 permet ainsi de gérer l'isostatisme en Z de la source lumineuse 7 via les points de références tertiaires 25A, 25B, 25C.
Dans un mode de réalisation non limitatif, tel qu'illustré sur la figure 9, la source lumineuse 7 comporte en outre un capot de protection 27. Le capot de protection 8 comprend une ouverture pour laisser passer la lumière émise par la source lumineuse 7. Grâce aux lames ressort 17A, 17B, 17C, le capot de protection 27 vient prendre appui contre la base 30 du moyen optique 3 lorsque le support 5 du moyen optique 3 est en position de verrouillage.

Dans la position de déverrouillage du support 5 du moyen optique 3, telle que représentée à la figure 1 :
- le moyen optique 3 et le support 5 du moyen optique 3 sont distants l'un de l'autre de sorte à permettre le retrait de la source lumineuse 7. On notera que dans ce cas la base 30 du moyen optique 3 et la base 50 du support 5 du moyen optique 3 peuvent être en contact ou non ;
- le premier logement 12A et le deuxième logement 12B sont distants l'un de l'autre, ils ne sont plus en vis-à-vis ;
- la source lumineuse 7 reste bloquée dans le deuxième logement 12B mais est accessible et peut être retirée du module lumineux 10.

Le module lumineux 10 des figures 1 et 2 est décrit ci-après selon trois modes de réalisation non limitatifs.

### • Premier mode de réalisation

Le module lumineux 10 comprend le moyen optique 3, le support 5 du moyen optique 3 et la source lumineuse décrits précédemment. Dans ce premier mode de réalisation, le support 5 du moyen optique 3 est mobile en translation par rapport au moyen optique 3 selon la direction longitudinale X.

Les figures 3 et 4 représentent schématiquement respectivement la base 30 du moyen optique 3 et la base 50 du support 5 du moyen optique 3 du module lumineux 10 selon un premier mode de réalisation non limitatif.

Dans un exemple non limitatif, le moyen optique 3 est un réflecteur.
Le moyen optique 3 comporte une base 30 et un miroir 31. Le miroir 31 assure les fonctions optiques du moyen optique 3. La base 30 supporte le miroir 31 et comprend une surface de contact destinée à entrer en contact avec la base 50 du support 5 du moyen optique 3. Cette base 30 délimite le premier logement 12A du moyen optique 3 illustré à la figure 3.

Le support mécanique 13 de la source lumineuse 7 comporte deux bras adaptés pour former deux points de référence primaires 9A, 9B.

Lorsque le support 5 du moyen optique 3 est en position de déverrouillage, la source lumineuse 7 est positionnée par l'opérateur dans le deuxième logement 12B du moyen optique 3, illustré à la figure 4.
En position de déverrouillage, deux moyens de blocage primaires 14A, 14B sont en contact avec le support mécanique 13 de la source lumineuse 7, et il y a un jeu O1 selon la direction longitudinale X tel qu'illustré sur la figure 4 entre l'extrémité du support mécanique 13 du côté de laquelle se trouvent les moyens d'émission de lumière 11 et le bord de la base 50 du support 5. Cela permet de pré-positionner la source lumineuse 7 dans le logement 12B.

Lorsque le support 5 du moyen optique 3 est poussé en translation selon la direction longitudinale X dans le moyen optique 3, le support mécanique 13 vient se loger également dans le premier logement 12A de la base 30 du moyen optique 3, illustré à la figure 3.

Lorsque les ergots 51 B, 51 B', 51A, 51A' décrits précédemment arrivent en butée respectivement contre les contreparties 32B, 32B', 32A, et 32A', le support 5 du moyen optique 3 est alors en position de verrouillage.

Comme il a déjà été précisé, c'est la translation du support 5 du moyen optique 3, selon la direction longitudinale X, qui permet de mettre le premier logement 12A et le deuxième logement 12B en vis-à-vis et les deux bases 30 et 50 en contact.

Lorsque le support 5 du moyen optique 3 est en position de verrouillage, dans le deuxième logement 12B, le support mécanique 13 est bloqué selon la direction longitudinale X par deux moyens de blocage primaires 14A, 14B de la base 50 du support 5 du moyen optique 3, illustrés à la figure 4. Ces deux moyens de blocage primaires 14A, 14B agissent sur le support mécanique 13 des moyens d'émission de lumière 11, de sorte que les deux points de référence primaires 9A, 9B, illustrés à la figure 3, sont en butée contre la paroi interne du logement 12A. La base 30 du moyen optique 3 permet ainsi de gérer l'isostatisme en X de la source lumineuse 7 via les points de références primaires 9A, 9B. A ce moment, les deux moyens de blocage primaires 14A, 14B sont contraints et le jeu O1 peut évoluer (par exemple augmenter) quand la source lumineuse 7 est bloquée dans le premier logement 12A au niveau des deux points de référence primaires 9A, 9B.

Dans un mode de réalisation non limitatif, les deux moyens de blocage primaires 14A, 14B sont deux lames ressorts. Ces deux lames ressorts permettent de plaquer facilement la source lumineuse 7 dans le module lumineux 10 selon la direction longitudinale X.

Lorsque le support 5 du moyen optique 3 est en position de verrouillage, dans le premier logement 12A, le support mécanique 13 est bloqué selon la direction transversale Y par un moyen de blocage secondaire 19 illustré à la figure 3. Le moyen de blocage secondaire 19 agit sur le support mécanique 13 au niveau du point de référence secondaire 15C, illustré à la figure 3.
A ce moment, il n'y a pas de jeu entre l'extrémité du support mécanique 13 de la source lumineuse 7 et le bord de la base 30 du moyen optique 3 tel qu'illustré sur la figure 3.

Dans un mode de réalisation non limitatif, le moyen de blocage secondaire 19 est une lame ressort. Cette lame ressort permet de plaquer facilement la source lumineuse 7 dans le module lumineux 10 selon la direction transversale Y.

Dans ce premier mode de réalisation pour le blocage de la source lumineuse 7, on vient donc positionner cette source lumineuse d'abord dans le deuxième logement 12B du support 5 du moyen optique 3 et ensuite dans le premier logement 12A moyen optique 3. En procédant de cette manière, on s'assure que la source lumineuse 7 est positionnée avec précision dans le module lumineux 10 et qu'elle reste stable dans cette position.

### • Deuxième mode de réalisation

Le module lumineux 10 comprend le moyen optique 3, le support 5 du moyen optique 3 et la source lumineuse 7 décrits précédemment. Dans ce deuxième mode de réalisation, le support 5 du moyen optique 3 est mobile en translation par rapport au moyen optique 3 selon la direction longitudinale Y.

Les figures 5, 6 et 7 représentent schématiquement respectivement la base 30 du moyen optique 3 et la base 50 du support 5 du moyen optique 3 du module lumineux 10 selon un second mode de réalisation non limitatif.
Dans un exemple non limitatif, le moyen optique 3 est un réflecteur.
Le moyen optique 3 comporte une base 30 et un miroir 31. Le miroir 31 assure les fonctions optiques du moyen optique 3. La base 30 supporte le miroir 31 et comprend une surface de contact destinée à entrer en contact avec la base 50 du support 5 du moyen optique 3. Cette base 30 délimite le premier logement 12A du moyen optique 3 illustré à la figure 5.

Le support mécanique 13 de la source lumineuse 7 comporte deux bras dont un adapté pour former un point de référence primaire 9C (le bras gauche dans l'exemple non limitatif illustré sur la figure 5).

Ainsi, lorsque le support 5 du moyen optique 3 est en position de déverrouillage, la source lumineuse 7 est positionnée par l'opérateur dans le deuxième logement 12B du support 5 du moyen optique 3 comme il est illustré à la figure 6.
En position de déverrouillage, deux moyens de blocage secondaires 18A, 18B de la base 50 du support 5 du moyen optique 3 viennent en contact avec deux points de référence secondaire 15A, 15B du support mécanique 13 de la source lumineuse 7, et il y a un jeu 02 selon la direction longitudinale Y tel qu'illustré sur la figure 6 entre le bras du support mécanique 13 opposé au deux points de référence secondaire 15A, 15B et le bord de la base 50 du support 5. Cela permet de pré-positionner la source lumineuse 7 dans le logement 12B.

Lorsque le support 5 du moyen optique 3 est poussé en translation selon la direction transversale Y dans le moyen optique 3, le support mécanique 13 vient également se loger dans le premier logement 12A de la base 30 du moyen optique 3, illustré à la figure 5.
Lorsque les ergots 51 B, 51 B', 51A, 51A' décrits précédemment arrivent en butée respectivement contre les contreparties 32B, 32B', 32A, et 32A', le support 5 du moyen optique 3 est alors en position de verrouillage.
La disposition des glissières 52A, 52B, 52A', 52B' comportant ces ergots et ces contreparties est différente de celle définie dans le premier mode de réalisation. Elles sont disposées de telle sorte qu'elles permettent une translation de la source lumineuse 7 selon la direction transversale Y.

Comme il a déjà été précisé, c'est la translation du support 5 du moyen optique 3 selon la direction transversale Y qui permet de mettre le premier logement 12A et le deuxième logement 12B en vis-à-vis et les deux bases 30 et 50 en contact.
Tel qu'illustré sur la figure 5, lorsque le support 5 du moyen optique 3 est en position de verrouillage, la source lumineuse 7, plus particulièrement le support mécanique 13, est bloquée dans le premier logement 12A selon la direction longitudinale X en un point de référence primaire 9C au moyen d'un moyen de blocage primaire 26 de la base 30 du moyen optique 3.
La base 30 du moyen optique 3 permet ainsi de gérer l'isostatisme en X de la source lumineuse 7 via le point de référence primaire 9C.
A ce moment, il n'y a pas de jeu entre l'extrémité du support mécanique 13 de la source lumineuse 7 (du côté duquel se trouvent les moyens d'émissions de lumière 11) et le bord de la base 30 du moyen optique 3 tel qu'illustré sur la figure 5, ni entre le bras (gauche sur la figure 5) du support mécanique 13 et le bord de la base 30 du moyen optique tel qu'illustré sur la figure 5.
On remarquera que pour pousser en translation le support 5 du moyen optique 3 selon la direction transversale Y, la base 30 du moyen optique 3 comporte une ouverture 39 prévue à cet effet (illustrée sur la figure 5).

Dans un autre mode de réalisation non limitatif illustré, le moyen de blocage primaire 26 est une lame ressort. Cette lame ressort permet de plaquer facilement la source lumineuse 7 dans le module lumineux 10 selon la direction longitudinale X.
Dans un autre mode de réalisation non limitatif (non illustré), le moyen de blocage primaire 26 et est un chanfrein. Le chanfrein permet un guidage et un blocage progressif de la source lumineuse 7 dans le module lumineux 10, selon la direction longitudinale X.

Tel qu'illustré sur la figure 6, lorsque le support 5 du moyen optique 3 est en position de verrouillage, la source lumineuse 7, plus particulièrement le support mécanique 13, est bloquée selon la direction transversale Y en deux points de référence secondaire 15A, 15B au moyen de deux moyens de blocage secondaires 18A, 18B de la base 50 du support 5 du moyen optique 3. A ce moment les deux moyens de blocage secondaires 18A, 18B sont contraints et le jeu 02 peut évoluer (par exemple augmenter) quand la source lumineuse 7 est bloquée dans le premier logement 12A au niveau du point de référence primaire 9C.

Dans un mode de réalisation non limitatif (non illustré), les deux moyens de blocage secondaires 18A, 18B sont des lames ressorts.
Dans un autre mode de réalisation non limitatif illustré, les deux moyens de blocage secondaires 18A, 18B sont des chanfreins. Les chanfreins permettent un guidage et un blocage progressif de la source lumineuse 7 dans le module lumineux 10, selon la direction transversale Y.

La figure 8 est une vue en coupe A-A' de la figure 6 au niveau du chanfrein 18B. Ce chanfrein 18B comprend une partie biseautée 53A et une partie droite 53B prolongeant la partie biseautée 53A. La partie biseautée 53A est adaptée pour guider la source lumineuse 7 (illustrée en pointillés dans une position non bloquée) selon la direction transversale Y et selon la direction normale Z lorsque ladite source lumineuse 7 est placée dans le support 5 du moyen optique 3, c'est-à-dire lorsque ce support 5 du moyen optique 3 est dans une position de déverrouillage. La source lumineuse 7 se déplace ainsi progressivement jusqu'à ce que son support mécanique 13 touche le fond du logement 12B. A ce moment, la partie droite 53B bloque la source lumineuse 7 (illustrée en traits pleins) dans le logement 12B du support 5 du moyen optique 3.
Selon une première variante de réalisation non limitative illustrée à la figure 6, les deux moyens de blocage secondaire 18A, 18B sont rapprochés et se trouvent à l'avant du module lumineux 10. Lorsque le support 5 du moyen optique 3 est dans une position de verrouillage, les deux moyens de blocage secondaire 18A, 18B prennent appui sur un bras de la source lumineuse 7. Selon une deuxième variante de réalisation non limitative illustrée à la figure 7, l'espacement entre les deux moyens de blocage secondaire 18A et 18B est plus important. Le moyen de blocage secondaire 18B se trouve ainsi à l'arrière du module lumineux 10. Lorsque le support 5 du moyen optique 3 est dans une position de verrouillage, le moyen de blocage secondaire 18A prend appui sur un des bras de la source lumineuse 7. Le moyen de blocage secondaire 18B prend appui sur le corps de la source lumineuse 7.
De cette manière, on améliore la stabilité de blocage, selon la direction transversale Y, du support mécanique 13.

On notera que pour le chanfrein 18A de la figure 7 et le chanfrein 26 de la figure 5, le même principe de blocage progressif que celui décrit pour le chanfrein 18B à la figure 8 s'applique. Ainsi, la figure 8 s'applique au chanfrein 18A. Par ailleurs, une figure similaire à la figure 8 s'applique au chanfrein 26 de la figure 5 en remplaçant la référence 50 par la référence 30.

Comme décrit précédemment, l'interface de connexion électrique 16 de la source lumineuse 7 est adaptée pour coopérer avec un connecteur électrique externe 37 (illustré sur la figure 11) de la source lumineuse 7. Afin d'éviter une déconnexion de ce connecteur électrique externe lors de l'utilisation du véhicule automobile, dans un mode de réalisation non limitatif illustré à la figure 12, le module lumineux 10 comprend en outre des moyens de calage 35 pour le maintien du connecteur électrique externe 37 sur le module lumineux 10. Les moyens de calage 35 appartiennent à la base 50 du support 5 du moyen optique 3.

Bien entendu, la description de l'invention n'est pas limitée aux modes de réalisation décrits ci-dessus.
Ainsi, dans un mode de réalisation non limitatif, il est prévu de déposer sur les parois internes du deuxième logement 12B une pâte ou une mousse thermiquement conductrice pour favoriser l'évacuation de la chaleur émise par les moyens d'émission de lumière 11 vers le support 5 du moyen optique 3.
Ainsi, dans un mode de réalisation non limitatif, la translation du support 5 du moyen optique 3 par rapport au module optique 3 peut être effectuée selon le même principe décrit selon une direction en biais avec une composante selon la direction longitudinale X et une composante selon la direction transversale Y.

Ainsi, l'invention décrite présente notamment les avantages suivants :
- on facilite le remplacement d'une source lumineuse défectueuse ;
- il n'est pas nécessaire de retirer le moyen optique 3 pour effectuer l'opération de remplacement ;
- il n'est pas nécessaire de mettre au rebut tout le moyen optique 3 juste pour remplacer une source lumineuse, ce qui réduit sensiblement le coût de remplacement de ladite source lumineuse ;
- une fois la source lumineuse retirée, il est possible d'identifier et de changer uniquement l'élément défectueux de cette source lumineuse 7 ;
- on utilise un système simple à manipuler pour libérer la source lumineuse. Il suffit à l'opérateur de faire translater le support 5 du moyen optique 3 par rapport audit moyen optique 3 ; soit selon la direction longitudinale X, soit selon la direction transversale Y.

## Revendications

1. Module lumineux (10) pour véhicule automobile, ledit module lumineux (10) comprenant :
- un moyen optique (3) monté fixe dans le module lumineux (10), ledit moyen optique (3) comprenant une base (30) avec un premier logement (12A) ;
- un support (5) du moyen optique (3) mobile en translation par rapport au moyen optique (3), ledit support (5) du moyen optique (3) comprenant une base (50) avec un deuxième logement (12B), ledit support (5) du moyen optique (3) étant adapté pour prendre :
- une position de verrouillage pour maintenir au moins une source lumineuse (7) en partie dans ledit premier logement (12A) et en partie dans ledit deuxième logement (12B) ; et
- une position de déverrouillage pour retirer ladite au moins une source lumineuse (7) du module lumineux (10) ;
- ladite au moins une source lumineuse (7) étant amovible et comprenant :
- des moyens d'émission de lumière (11) ;
- un support mécanique (13) des moyens d'émission de lumière (11).

2. Module lumineux (10) selon la revendication 1, dans lequel le support (5) du moyen optique (3) est mobile en translation selon :
- une direction longitudinale (X) ; ou
- une direction transversale (Y) perpendiculaire à la direction longitudinale (X) ; ou
- une direction en biais ayant une composante selon la direction longitudinale (X) et une composante selon la direction transversale (Y).

3. Module lumineux (10) selon la revendication 1 ou la revendication 2, dans lequel ledit module lumineux (10) comprend des moyens de verrouillage (52A, 52B, 52A', 52B').

4. Module lumineux (10) selon la revendication 3, dans lequel les moyens de verrouillage comprennent deux paires de glissières (52A, 52B, 52A', 52B') disposées de part et d'autre de la source lumineuse (7).

5. Module lumineux (10) selon la revendication 4, dans lequel chaque glissière (52A, 52B, 52A', 52B') comprend :
- une contrepartie (32A, 32B, 32A', 32B') appartenant au moyen optique (3) ;
- un ergot (51A, 51 B, 51A', 51 B') appartenant au support (5) du moyen optique (3) adapté pour coopérer avec ladite contrepartie (32A, 32B, 32A', 32B') ;
- au moins une lame ressort (33A, 33B, 33A', 33B') appartenant au moyen optique (3) adaptée pour maintenir l'ergot (51A, 51 B, 51A', 51 B') dans la contrepartie (32A, 32B, 32A', 32B').

6. Module lumineux (10) selon l'une quelconque des revendications 1 à 5, dans lequel la source lumineuse (7) est bloquée dans le premier logement (12A) et le deuxième logement (12B) lorsque le support (5) du moyen optique (3) est en position de verrouillage :
- selon la direction longitudinale (X) en au moins un point de référence primaire (9A, 9B, 9C) au moyen d'au moins un moyen de blocage primaire (14A, 14B, 26) ;
- selon la direction transversale (Y) en au moins un point de référence secondaire (15A, 15B, 15C) au moyen d'au moins un moyen de blocage secondaire (18A, 18B, 19).

7. Module lumineux (10) selon la revendication 6, dans lequel le moyen de blocage primaire est une lame ressort (14A, 14B) ou un chanfrein (26).

8. Module lumineux (10) selon la revendication 6 ou la revendication 7 dans lequel le moyen de blocage secondaire est un chanfrein (18A, 18B) ou une lame ressort (19).

9. Module lumineux (10) selon l'une quelconque des revendications 6 à 8, dans lequel la source lumineuse (7) est bloquée dans le premier logement (12A) et le deuxième logement (12B) lorsque le support (5) du moyen optique (3) est en position de verrouillage suite à une translation selon la direction longitudinale (X) :
- selon la direction longitudinale (X) en deux points de référence primaires (9A, 9B) au moyen de deux moyens de blocage primaires (14A, 14B) de la base (50) du support (5) du moyen optique (3) ;
- selon la direction transversale (Y) en un point de référence secondaire (15C) au moyen d'un moyen de blocage secondaire (19).

10. Module lumineux (10) selon la revendication 9, dans lequel les deux moyens de blocage primaire (14A, 14B) et le moyen de blocage secondaire (19) sont des lames ressorts.

11. Module lumineux (10) selon l'une quelconque des revendications 6 à 8, dans lequel la source lumineuse (7) est bloquée dans le premier logement (12A) et le deuxième logement (12B) lorsque le support (5) du moyen optique (3) est en position de verrouillage suite à une translation selon la direction transversale :
- selon la direction longitudinale (X) en un point de référence primaire (9C) au moyen d'un moyen de blocage primaire (26) de la base (30) du moyen optique (3) ;
- selon la direction transversale (Y) en deux points de référence secondaires (15A, 15B) au moyen de deux moyens de blocage secondaires (18A, 18B) de la base (50) du support (5) du moyen optique (3).

12. Module lumineux (10) selon la revendication 11, dans lequel le moyen de blocage primaire (26) et les deux moyens de blocage secondaires (18A, 18B) sont des chanfreins.

13. Module lumineux (10) selon l'une quelconque des revendications 1 à 12, dans lequel la source lumineuse (7) est bloquée dans le deuxième logement (12B) selon une direction normale (Z) en trois points de référence tertiaires (25A, 25B, 25C) au moyen de trois moyens de blocage tertiaires (17A, 17B, 17C).

14. Module lumineux (10) selon la revendication 13, dans lequel les trois moyens de blocage tertiaires sont trois lames ressorts (17A, 17B, 17C) appartenant à la base (50) du support (5) du module optique (3).

15. Module lumineux (10) selon l'une quelconque des revendications 1 à 14, ledit module lumineux (10) comprend en outre des moyens de calage (35) pour le maintien d'un connecteur d'alimentation (37) de la source lumineuse (7) sur ledit module lumineux (10).

16. Module lumineux (10) selon l'une quelconque des revendications 1 à 15, dans lequel le support (5) du moyen optique (3) est un radiateur.

17. Module lumineux selon l'une quelconque des revendications 1 à 16, dans lequel les moyens d'émission de lumière (11) comportent une puce émettrice semi-conductrice.
